# EUROPÄISCHE PATENTSCHRIFT

(11) **EP 3 726 017 B1**
(45) Veröffentlichungstag und Bekanntmachung des Hinweises auf die Patenterteilung: **14.12.2022**
(21) Anmeldenummer: 20162563.9
(22) Anmeldetag: 12.03.2020
(51) Int. Cl.: F01N 3/20, F01N 3/28, F01N 13/08

(54) **MISCHER**
MIXER
MÉLANGEUR

(30) Priorität: 16.04.2019 DE 102019109983
(43) Veröffentlichungstag der Anmeldung: 21.10.2020
(73) Patentinhaber: Purem GmbH, 66539 Neunkirchen (DE)
(72) Erfinder: Kurpejovic, Enver, 73230 Kirchheim unter Teck (DE); Hass, Ruben, 70599 Stuttgart (DE); Schwarz, Roland, 73732 Esslingen (DE); Karch, Adam, 73773 Aichwald (DE); Preisser, Elke, 73765 Neuhausen (DE)
(74) Vertreter: Ruttensperger Lachnit Trossin Gomoll

(56) Entgegenhaltungen:
- DE-A1-102010 018 743
- DE-A1-102016 104 361
- DE-A1-102016 117 900
- DE-A1-102018 119 185
- US-A1- 2010 005 790
- US-B2- 8 371 114

## Beschreibung

Die vorliegende Erfindung betrifft einen Mischer für eine Abgasanlage einer Brennkraftmaschine, der in der Abgasanlage dazu eingesetzt werden kann, ein in den Abgasstrom eingespritztes Reaktionsmittel, wie zum Beispiel eine als Reduktionsmittel wirksame Harnstoff/Wasser-Lösung, mit dem Abgasstrom zu vermischen.

Zum Verringern des Stickoxidanteils in dem von einer Diesel-Brennkraftmaschine ausgestoßenen Abgas ist es bekannt, zur Durchführung einer selektiven katalytischen Reduktion (SCR) ein Reaktionsmittel in den Abgasstrom einzuspritzen, um an einem SCR-Katalysator eine katalytische Umsetzung des im Abgas transportierten Stickoxids zu erzeugen. Für eine effiziente Durchführung dieser katalytischen Umsetzung ist eine gute Durchmischung des Reaktionsmittels mit dem Abgas erforderlich.

Die DE 10 2016 104 361 A1 offenbart einen Mischer gemäß dem Oberbegriff des Anspruchs 1. In einem eine stromaufwärts orientiert angeordnete Anströmseite bereitstellenden plattenartigen Mischerkörper sind eine erste Abgasdurchströmöffnung mit größerem Öffnungsquerschnitt sowie in einer diese umgebenden Konfiguration zweite Abgasdurchströmöffnungen mit kleinerem Öffnungsquerschnitt vorgesehen. Stromabwärts des plattenartigen Mischerkörpers wird durch einen Injektor Reaktionsmittel in den durch die erste Abgasdurchströmöffnung hindurchtretenden Abgasstrom eingeleitet.

Die DE 10 2018 119 185 A1 offenbart einen Mischer mit einem plattenartigen Mischerkörper mit einer im Randbereich desselben angeordneten Abgasdurchströmöffnung.

Die US 2010/0005790 A1 offenbart einen in einem Abgasrohr angeordneten, plattenartigen Mischerkörper, der im Bereich einer Abgasdurchströmöffnung einen in Richtung stromaufwärts sich erstreckenden, rohrartigen Reaktionsmittelaufnahmekörper trägt.

Die DE 10 2010 018 743 A1 offenbart in einem Abgaskanal eine Blendenvorrichtung mit einer Mehrzahl von durch diese hindurchführenden Abgasdurchströmöffnungen. Im Bereich der Abgasdurchströmöffnungen wird über zu diesen offene Kanäle ein Reaktionsmittel in das durch die Abgasdurchströmöffnungen hindurchströmende Abgas eingeleitet.

Die US 8 371 114 B2 offenbart eine Abgasanlage, bei welcher Reaktionsmittel in Richtung auf einen stromaufwärts eines Katalysators angeordneten Mischer mit einer Mehrzahl von darin ausgebildeten Abgasdurchströmöffnungen eingespritzt wird.

Es ist die Aufgabe der vorliegenden Erfindung, einen Mischer für eine Abgasanlage einer Brennkraftmaschine bereitzustellen, welcher bei Erzeugung eines geringen Strömungswiderstands für das in einer Abgasanlage strömende Abgas bei kompakter Bauart eine effiziente Durchmischung eines in den Abgasstrom eingespritzten Reaktionsmittels mit dem Abgas herbeiführt.

Erfindungsgemäß wird diese Aufgabe gelöst durch einen Mischer für eine Abgasanlage einer Brennkraftmaschine gemäß Anspruch 1, umfassend:
- einen plattenartigen Mischerkörper mit einer bezüglich einer Abgasströmung in Richtung stromaufwärts orientiert anzuordnenden Anströmseite und einer bezüglich der Abgasströmung in Richtung stromabwärts orientiert anzuordnenden Abströmseite,
- eine erste Abgasdurchströmöffnung in dem Mischerkörper,
- einen an dem Mischerkörper im Bereich der ersten Abgasdurchströmöffnung getragenen Reaktionsmittelaufnahmekörper,
- eine Mehrzahl von zweiten Abgasdurchströmöffnungen in dem Mischerkörper, wobei die zweiten Abgasdurchströmöffnungen in dem Mischerkörper die erste Abgasdurchströmöffnung umgebend angeordnet sind.

Bei dem erfindungsgemäß aufgebauten Mischer sind grundsätzlich zwei verschiedene Arten von Öffnungen vorgesehen. Zum einen wird ein Teil des den Mischer durchströmenden Abgases durch die erste Abgasdurchströmöffnung hindurch geleitet und tritt dabei insbesondere auch in Wechselwirkung mit dem mit Reaktionsmittel benetzten Reaktionsmittelaufnahmekörper. Dadurch wird eine unmittelbare Wechselwirkung des Abgasstroms mit dem am Reaktionsmittelaufnahmekörper aufgenommenen Reaktionsmittel herbeigeführt. Durch die die erste Abgasdurchströmöffnung umgebenden zweiten Abgasdurchströmöffnungen wird weiter eine Verwirbelung herbeigeführt, welche die effiziente Durchmischung von Abgas und Reaktionsmittel weiter verstärkt. Gleichzeitig ist durch die Vielzahl an Öffnungen und somit die Möglichkeit, einen großen Gesamtöffnungsquerschnitt bereitzustellen, der durch einen derartigen Mischer eingeführte Strömungswiderstand vergleichsweise gering, auch wenn der plattenartige Mischerkörper im Wesentlichen orthogonal zu einer Abgas-Hauptströmungsrichtung stromaufwärts des Mischers angeordnet wird.

Für eine gute Durchströmbarkeit des Mischerkörpers ist dadurch gesorgt, dass die erste Abgasdurchströmöffnung in Richtung einer Öffnungslängsachse langgestreckt ausgebildet ist. Wenn an dem Mischerkörper ein an der Abströmseite hervorstehender, die erste Abgasdurchströmöffnung vorzugsweise im Wesentlichen vollständig umgebender Öffnungsrand vorgesehen ist, wird einerseits die Möglichkeit gegeben, den Reaktionsmittelaufnahmekörper beispielsweise im Bereich des Öffnungsrands am Mischerkörper festzulegen. Andererseits kann durch den Öffnungsrand ein den Abgasstrom definiert durch den Mischerkörper hindurch leitender Strömungsführungseffekt erzielt werden.

Zum Bereitstellen einer stabilen Verbindung zwischen dem Mischerkörper und dem Reaktionsmittelaufnahmekörper kann der Reaktionsmittelaufnahmekörper an dem Öffnungsrand getragen sein. Um eine ausreichende Oberfläche für die Wechselwirkung mit dem in den Abgasstrom einzuspritzenden Reaktionsmittel bereitstellen zu können, wird weiter vorgeschlagen, dass der Reaktionsmittelaufnahmekörper an der Abströmseite des Mischerkörpers über den Öffnungsrand hervorstehend ausgebildet ist.

Um durch die zweiten Abgasdurchströmöffnungen eine verstärkte Verwirbelung bzw. Vermischung von Abgas und Reaktionsmittel herbeiführen zu können, wird vorgeschlagen, dass in Zuordnung zu wenigstens einer, vorzugsweise jeder zweiten Abgasdurchströmöffnung an dem Mischerkörper eine an der Abströmseite hervorstehende Ausformung vorgesehen ist, wobei die Ausformung an einer der ersten Abgasdurchströmöffnung zugewandten Seite zum Bereitstellen einer der zweiten Abgasdurchströmöffnungen offen ist. Dabei kann beispielsweise wenigstens eine, vorzugsweise jede der Ausformungen im Wesentlichen die Form eines Kugelkalottensegments aufweisen. An der Innenseite einer so geformten Ausformung kann das von der Anströmseite heranströmende Abgas umgelenkt und über die der ersten Abgasdurchströmöffnung zugewandte und in der Ausformung bereitgestellte zweite Abgasdurchströmöffnung auf die erste Abgasdurchströmöffnung zu gerichtet abgegeben werden. Da vorzugsweise alle zweiten Abgasdurchströmöffnungen derart bereitgestellt sind, wird somit nahezu über den gesamten Umfangsbereich der ersten Abgasdurchströmöffnung eine auf die erste Abgasdurchströmöffnung bzw. den darin aufgenommenen Reaktionsmittelaufnahmekörper zu gerichtete Abgasströmung erzielt.

Um auch den durch den in der ersten Abgasdurchströmöffnung aufgenommenen Reaktionsmittelaufnahmekörper eingeführten Strömungswiderstand möglichst gering zu halten, stellt der Reaktionsmittelaufnahmekörper einen von Abgas durchströmbaren Reaktionsmittelaufnahmekörper-Durchströmkanal bereit. Der Reaktionsmittelaufnahmekörper ist somit von Abgas durchströmbar und erzeugt im Wesentlichen keine Umlenkung insbesondere des durch die erste Abgasdurchströmöffnung hindurch strömenden Abgases.

Für eine effiziente Benetzung des Reaktionsmittelaufnahmekörpers mit in den Abgasstrom eingespritztem Reaktionsmittel weist der Reaktionsmittelaufnahmekörper einen in Richtung der Öffnungslängsachse sich V-förmig verjüngenden Reaktionsmittelaufnahmebereich auf. Hierfür kann der Reaktionsmittelaufnahmekörper im Reaktionsmittelaufnahmebereich zwei angewinkelt zueinander angeordnete Aufnahmeplattenabschnitte aufweisen, wobei in wenigstens einem, vorzugsweise jedem der Aufnahmeplattenabschnitte wenigstens eine, vorzugsweise eine Mehrzahl von zu dem Reaktionsmittelaufnahmekörper-Durchströmkanal offenen Reaktionsmitteldurchtrittsöffnungen vorgesehen ist.

Der beispielsweise als Blechumformteil bereitgestellte Reaktionsmittelaufnahmekörper kann einen im Wesentlichen ringsegmentartig ausgebildeten, den Reaktionsmittelaufnahmekörper-Durchströmkanal bereichsweise umgebenden Zentralbereich und ausgehend von dem Zentralbereich die angewinkelt, vorzugsweise im Wesentlichen ungekrümmt aufeinander zu verlaufenden Aufnahmeplattenabschnitte aufweisen. Somit können alle mit dem Abgas bzw. dem Reaktionsmittel in Wechselwirkung tretenden Bereiche des Reaktionsmittelaufnahmekörpers an ein und demselben Bauteil durch Umformen eines Blechrohlings bereitgestellt werden.

Die Erfindung betrifft ferner eine Abgasanlage für eine Brennkraftmaschine, umfassend:
- ein Mischergehäuse,
- einen in einem stromaufwärtigen Endbereich des Mischergehäuses an dieses anschließenden ersten Abgasführungsbereich,
- einen in einem stromabwärtigen Endbereich des Mischergehäuses an dieses anschließenden zweiten Abgasführungsbereich,
- einen in einem Mischertragebereich des Mischergehäuses angeordneten, erfindungsgemäß aufgebauten Mischer, wobei der Mischer mit seiner Anströmseite dem ersten Abgasführungsbereich zugewandt angeordnet ist,
- eine an dem Mischergehäuse stromabwärts bezüglich des Mischerkörpers angeordnete Reaktionsmittelabgabeanordnung zur Abgabe von Reaktionsmittel mit einer auf den Reaktionsmittelaufnahmekörper zu gerichteten Reaktionsmittel-Hauptabgaberichtung.

Um zu gewährleisten, dass das gesamte von stromaufwärts herangeführte Abgas den Mischer durchsetzt und dabei auch eine effiziente Wechselwirkung mit dem Reaktionsmittel erzeugt werden kann, wird vorgeschlagen, dass der Mischerkörper mit seiner Anströmseite im Wesentlichen orthogonal zu einer Abgas-Hauptströmungsrichtung im ersten Abgasführungsbereich angeordnet ist, und dass die Reaktionsmittel-Hauptabgaberichtung im Wesentlichen orthogonal zur Abgas-Hauptströmungsrichtung im ersten Abgasführungsbereich steht.

In dem Mischergehäuse kann anschließend an den Mischertragebereich ein Strömungsumlenkbereich ausgebildet sein, wobei eine Abgas-Hauptströmungsrichtung in dem Mischergehäuse stromaufwärts des Strömungsumlenkbereichs und eine Abgas-Hauptströmungsrichtung in dem Mischergehäuse stromabwärts des Strömungsumlenkbereichs näherungsweise orthogonal zueinander stehen. Durch die Umlenkung des Stroms aus Abgas und Reaktionsmittel im Mischergehäuse wird eine weiter verbesserte Durchmischung von Reaktionsmittel und Abgas herbeigeführt, wodurch auch eine kompakte Bauart unterstützt wird.

In der erfindungsgemäß aufgebauten Abgasanlage kann für eine effiziente Abgasreinigung in dem ersten Abgasführungsbereich wenigstens eine Abgasbehandlungseinheit, vorzugsweise Oxidationskatalysator oder/und Partikelfilter oder/und Stickoxid-Speicherkatalysator, angeordnet sein. Ferner kann in dem zweiten Abgasführungsbereich wenigstens eine Abgasbehandlungseinheit, vorzugsweise SCR-Katalysator, angeordnet sein.

Die vorliegende Erfindung wird nachfolgend mit Bezug auf die beiliegenden Figuren detailliert beschrieben. Es zeigt:
- Fig. 1: eine perspektivische, teilweise im Schnitt dargestellte Abgasanlage für eine Brennkraftmaschine;
- Fig. 2: eine Ansicht der Abgasanlage der Fig. 1 in Blickrichtung II in Fig. 1;
- Fig. 3: eine der Fig. 2 entsprechende Ansicht der Abgasanlage in vergrößerter Darstellung;

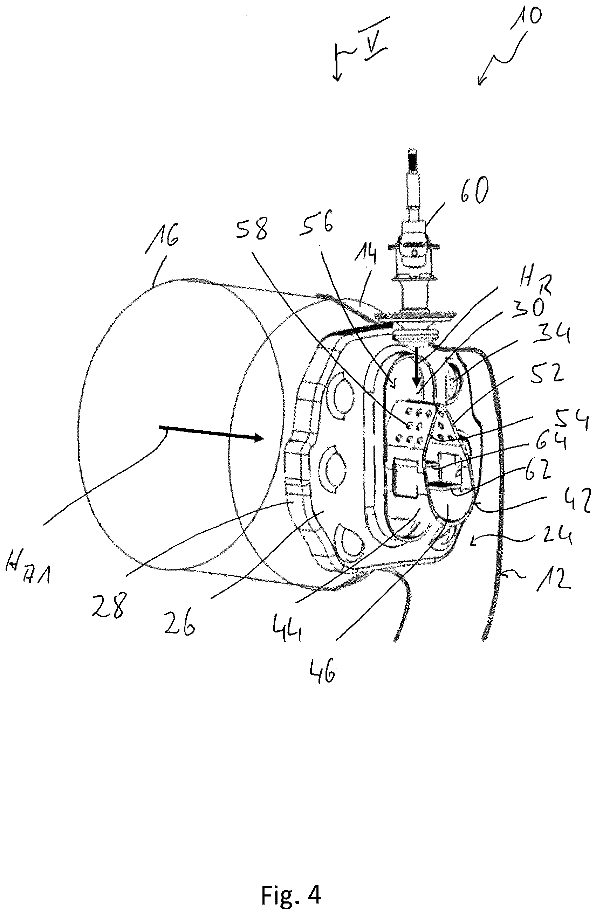

- Fig. 4: das in Fig. 3 dargestellte Detail der Abgasanlage in perspektivischer Ansicht;
- Fig. 5: eine teilweise offen dargestellte Draufsicht des in Fig. 4 dargestellten Details in Blickrichtung V in Fig. 4.

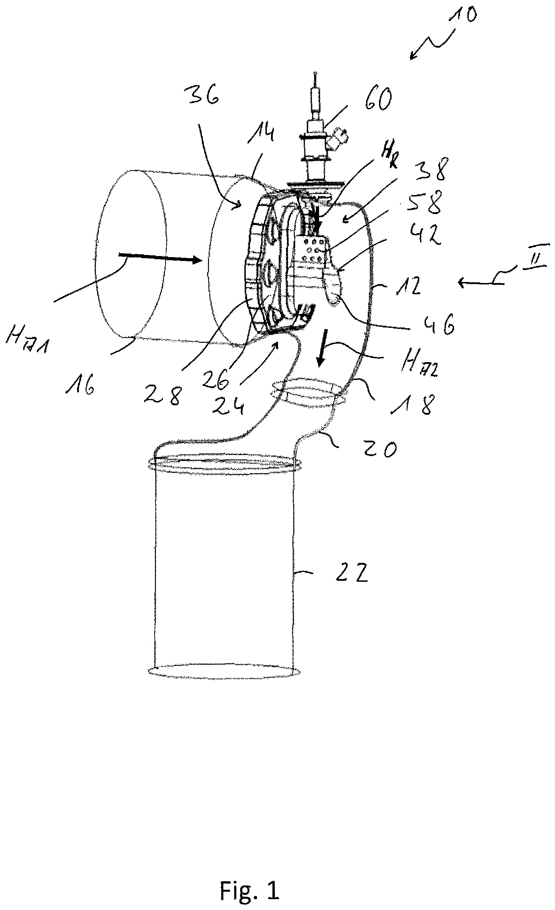

Die Fig. 1 zeigt eine allgemein mit 10 bezeichnete Abgasanlage, die in ein Abgas aus einer Brennkraftmaschine zur Umgebung hin abgebendes Abgasführungssystem integriert werden kann. Die Abgasanlage 10 umfasst als zentralen Bestandteil ein Mischergehäuse 12. An einen stromaufwärtigen Endbereich 14 des Mischergehäuses 12 ist ein rohrartiger erster Abgasführungsbereich 16 angebunden. An einen stromabwärtigen Endbereich 18 des Mischergehäuses 12 ist über ein Zwischengehäuse 20 ein rohrartiger zweiter Abgasführungsbereich 22 angebunden.

Im ersten Abgasführungsbereich 16 können eine oder mehrere Abgasbehandlungseinheiten vorgesehen sein. Diese können beispielsweise einen Oxidationskatalysator, insbesondere Dieseloxidationskatalysator bzw. einen Partikelfilter umfassen. Auch ein Stickoxid-Speicherkatalysator kann als Abgasbehandlungseinheit im ersten Abgasführungsrohrbereich 16 angeordnet sein. Auch im zweiten Abgasführungsbereich 22 können eine oder mehrere Abgasbehandlungseinheiten vorgesehen sein. Diese können beispielsweise einen SCR-Katalysator umfassen.

Nahe dem stromaufwärtigen Endbereich 14 des Mischergehäuses 12 ist in diesem ein allgemein mit 24 bezeichneter Mischer vorgesehen. Der Mischer 24 weist einen in seiner Umfangskontur an die Innenkontur des Mischergehäuses 12 angepassten, plattenartigen Mischerkörper 26 auf. Der Mischerkörper 26 kann als Blechumformteil bereitgestellt sein und kann an seinem Außenumfangsbereich einen auch für eine stabile Festlegung am Mischergehäuse 12 eingesetzten in Richtung stromaufwärts gebogenen Körperrand 28 aufweisen.

In seinem zentralen Bereich weist der Mischerkörper 26 eine in Richtung einer Öffnungslängsachse L langgestreckte erste Abgasdurchströmöffnung 30 auf. Die erste Abgasdurchströmöffnung 30 ist von einem in Richtung stromabwärts orientierten, um die erste Abgasdurchströmöffnung 30 im Wesentlichen unterbrechungsfrei umlaufenden Öffnungsrand 32 umgeben. Die Öffnungslängsachse L steht im Wesentlichen orthogonal zu einer Abgas-Hauptströmungsrichtung H_{A1} im ersten Abgasführungsbereich 16. In dieser Abgas-Hauptströmungsrichtung H_{A1} im ersten Abgasführungsbereich 16 strömt das Abgas durch diesen bzw. eine darin vorgesehene Abgasbehandlungseinheit hindurch in Richtung auf den Mischer 24 zu. Es ist selbstverständlich, dass lokal von dieser Abgas-Hauptströmungsrichtung abweichende Strömungsrichtungen vorhanden sein können.

Im Mischerkörper 26 sind die erste Abgasdurchströmöffnung 30 umgebend mehrere zweite Abgasdurchströmöffnung 34 angeordnet. Die zweiten Abgasdurchströmöffnung 34 bilden somit eine um den Öffnungsrand 32 sich erstreckende ringartige Struktur in Umfangsrichtung aufeinanderfolgender zweiter Abgasdurchströmöffnung 34. Zum Bereitstellen dieser zweiten Abgasdurchströmöffnung 34 sind in dem plattenartigen Mischerkörper 26 in Richtung von einer zum ersten Abgasführungsbereich 16 hin zugewandt liegenden Anströmseite 36 weg, somit also in Richtung zu einer vom ersten Abgasführungsbereich 16 abgewandt liegenden Abströmseite 38 hervorstehende Ausformungen 40 gebildet. Jede dieser Ausformungen 40 hat die Form eines Kugelkalottensegments, insbesondere näherungsweise eines Viertels eines sphärischen Körpers, und ist so orientiert, dass eine jeweilige zweite Abgasdurchströmöffnung 34 dem Öffnungsrand 32 bzw. der ersten Abgasdurchströmöffnung 30 zugewandt liegt. Während das in der Abgashauptströmungsrichtung H_{A1} aus dem ersten Abgasführungsbereich 16 auf den Mischerkörper 26 zu strömende Abgas die erste Abgasdurchströmöffnung 30 näherungsweise in dieser Abgas-Hauptströmungsrichtung H_{A1} durchströmt, erfolgt im Bereich der Ausformungen 40 bzw. der durch diese bereitgestellten zweiten Abgasdurchströmöffnung 34 eine Umlenkung des Abgasstroms in Richtung nach innen, also auf die erste Abgasdurchströmöffnung 30 zu, so dass hier eine Fokussierung des Abgasstroms auf den Bereich der ersten Abgasdurchströmöffnung 30 zu erfolgt.

Am Mischerkörper 26 ist in der ersten Abgasdurchströmöffnung 30 ein Reaktionsmittelaufnahmekörper 42 getragen. Der beispielsweise aus einem bandartigen Blechrohling geformte Reaktionsmittelaufnahmekörper 42 bildet einen näherungsweise ringsegmentartig ausgebildeten Zentralbereich 44, welcher einen in dem Reaktionsmittelaufnahmekörper 42 vorhandenen Reaktionsmittelaufnahmekörper-Durchströmkanal 46 umgibt. An zwei einander gegenüberliegenden Schenkelbereichen 48, 50 ist der Reaktionsmittelaufnahmekörper 42 mit seinem Zentralbereich 44 an den Öffnungsrand 32 der ersten Abgasdurchströmöffnung 30 anliegend angeordnet und daran beispielsweise durch Materialschluss, wie z. B. Verschweißung oder Verlötung, festgelegt. Anschließend an die Schenkelbereiche 48, 50 des Zentralbereichs 44 erstrecken sich Aufnahmeplattenabschnitte 52, 54 angewinkelt aufeinander zu und bilden somit einen im Wesentlichen V-förmigen Reaktionsmittelaufnahmebereich 56 des Reaktionsmittelaufnahmekörpers 42. In den beiden im Wesentlichen ungekrümmt ausgebildeten Aufnahmeplattenabschnitten 52, 54 sind jeweils mehrere Reaktionsmitteldurchtrittsöffnungen 58 ausgebildet, welche somit eine Verbindung zu dem von dem Reaktionsmittelaufnahmekörper 42 umgebenen Reaktionsmittelaufnahmekörper-Durchströmkanal 46 herstellen.

Der Reaktionsmittelaufnahmekörper 42 ist in der ersten Abgasdurchströmöffnung 30 bzw. am plattenartigen Mischerkörper 26 so angeordnet, dass der Reaktionsmittelaufnahmebereich 56 sich in Richtung der Öffnungslängsachse L verjüngend ausgebildet ist. Die V-förmige Gestalt des Reaktionsmittelaufnahmebereichs 56 weist somit in Richtung auf eine allgemein auch als Injektor bezeichnete Reaktionsmittelabgabeanordnung 60 zu. Diese ist stromabwärts des Mischerkörpers 26 am Mischergehäuse 12 derart getragen, dass von dieser abgegebenes Reaktionsmittel, beispielsweise eine Harnstoff/Wasser-Lösung, in einer Reaktionsmittel-Hauptabgaberichtung H_{R} stromabwärts des Mischerkörpers 26 in das Mischergehäuse 12 abgegeben wird. Die Reaktionsmittel-Hauptabgaberichtung H_{R} kann im Wesentlichen der Erstreckungsrichtung der Öffnungslängsachse L entsprechen, so dass das Reaktionsmittel im Wesentlichen in der Längsrichtung der ersten Abgasdurchströmöffnung 30 in Richtung auf den Reaktionsmittelaufnahmekörper 42 zu abgegeben wird. Es sei darauf hingewiesen, dass im Allgemeinen das Reaktionsmittel in Form eines Sprühkegels abgegeben wird, wobei die Reaktionsmittel-Hauptabgaberichtung H_{R} einer Zentralachse eines derartigen Sprühkegels entsprechen kann.

Das von der Reaktionsmittelabgabeanordnung 60 in der Reaktionsmittel-Hauptabgaberichtung H_{R} auf den Reaktionsmittelaufnahmebereich 56 zu abgegebene Reaktionsmittel trifft im Wesentlichen auf die Aufnahmeplattenabschnitte 52, 58 auf. Dazu trägt auch der durch die zweiten Abgasdurchströmöffnung 34 in Richtung auf die erste Abgasdurchströmöffnung 30 bzw. den Reaktionsmittelaufnahmekörper 42 zu gerichtete Abgasstrom bei. Das Reaktionsmittel benetzt somit die Außenumfangsfläche des Reaktionsmittelaufnahmekörpers 42 bzw. tritt durch die Reaktionsmitteldurchtrittsöffnungen 58 in den Innenraum des Reaktionsmittelaufnahmekörpers 42 bzw. den Reaktionsmittelaufnahmekörper-Durchströmkanal 46 ein. An den beiden Schenkelbereichen 48, 50 des Zentralbereichs 44 sind nach innen gebogene Laschen 62, 64 gebildet, welche jeweils eine Auffangfläche für in das Innere des Reaktionsmittelaufnahmekörpers 42 eingetretenes Reaktionsmittel bereitstellen. Somit wird eine effiziente Benetzung der Oberfläche des Reaktionsmittelaufnahmekörpers 42 mit Reaktionsmittel gewährleistet. Da der Reaktionsmittelaufnahmekörper 42 durch den diesen umströmenden Abgasstrom erwärmt wird, wird somit die Abdampfung des in Form eines Sprühnebels von der Reaktionsmittelabgabeanordnung 60 abgegebenen Reaktionsmittels unterstützt. Zusätzlich sorgt die Strömungsführung insbesondere auch der zweiten Abgasdurchströmöffnungen 34 für eine starke Verwirbelung des Abgasstroms im Bereich des Reaktionsmittelaufnahmekörpers 42, was die Durchmischung von Reaktionsmittel und Abgas unterstützt.

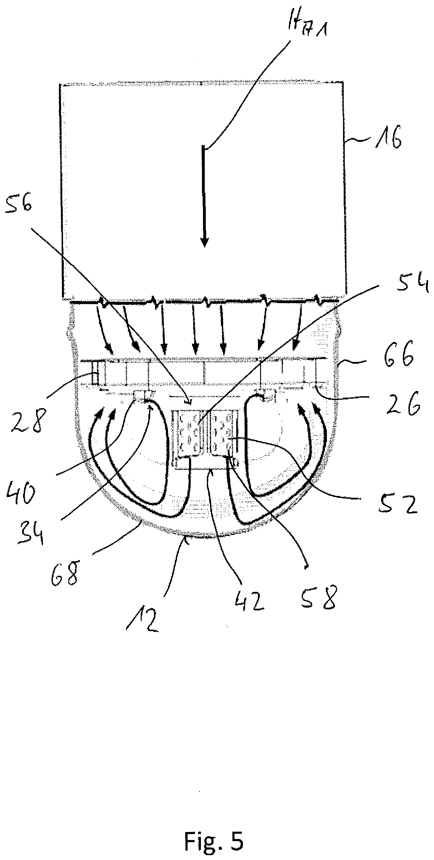

Das so hergestellte Gemisch aus Reaktionsmittel und Abgas strömt an der Abströmseite 38 des Mischers 24 zunächst noch im Wesentlichen in einer der Abgas-Hauptströmungsrichtung H_{A1} im ersten Abgasführungsbereich 16 entsprechenden Richtung. Wie die Fig. 5 dies veranschaulicht, wird der Strom des Gemisches aus Abgas und Reaktionsmittel jedoch an der Innenoberfläche des Mischergehäuses 12 umgelenkt und in Richtung auf den stromabwärtigen Endbereich 18 des Mischergehäuses 12 zugeleitet. Hierzu bildet das Mischergehäuses 12 stromabwärts eines Mischertragebereichs 66, in welchen der Mischerkörper 26 mit seinem Körperrand 28 am Mischergehäuse 12 festgelegt ist, einen Strömungsumlenkbereich 68, in welchem das den Mischer 24 durchströmende Abgas bzw. das aus diesem austretende Gemisch aus Abgas und Reaktionsmittel entlang der Innenoberfläche des Mischergehäuses 12 in Richtung zum stromabwärtigen Endbereich 18 umgelenkt wird. Im Bereich dieses stromabwärtigen Endbereichs 18 des Mischergehäuses 12 strömt das Abgas im Wesentlichen in einer Abgas-Hauptströmungsrichtung H_{A2}, welche zur Abgas-Hauptströmungsrichtung H_{A1} im ersten Abgasführungsbereich 16 bzw. auch im stromaufwärtigen Endbereich 14 des Mischergehäuses 12 näherungsweise orthogonal steht. In dieser Richtung strömt das Gemisch aus Reaktionsmittel und Abgas dann in Richtung auf den zweiten Abgasführungsbereich 22 zu, wo im SCR-Katalysator dann die selektive katalytische Reduktion von im Abgas enthaltenem Stickoxid erfolgt.

Mit dem erfindungsgemäßen Aufbau eines Mischers wird eine effiziente Durchmischung von Abgas und in dieses eingespritztem Reaktionsmittel erreicht. Da im Mischer eine Vielzahl von den Abgasdurchtritt zulassenden Öffnungen vorgesehen ist, führt dieser trotz des Umstandes, dass er mit seiner Anströmseite näherungsweise orthogonal zur Abgas-Hauptströmungsrichtung stromaufwärts des Mischers angeordnet ist, nur einen vergleichsweise geringen Strömungswiderstand ein. Der erfindungsgemäß aufgebaute Mischer kann einfach durch Umformen zweier Blechrohlinge bereitgestellt werden, wobei einer der Blechrohlinge zum Aufbau eines Mischerkörpers und der andere der Blechrohlinge zum Aufbau des Reaktionsmittelaufnahmekörpers verwendet wird.

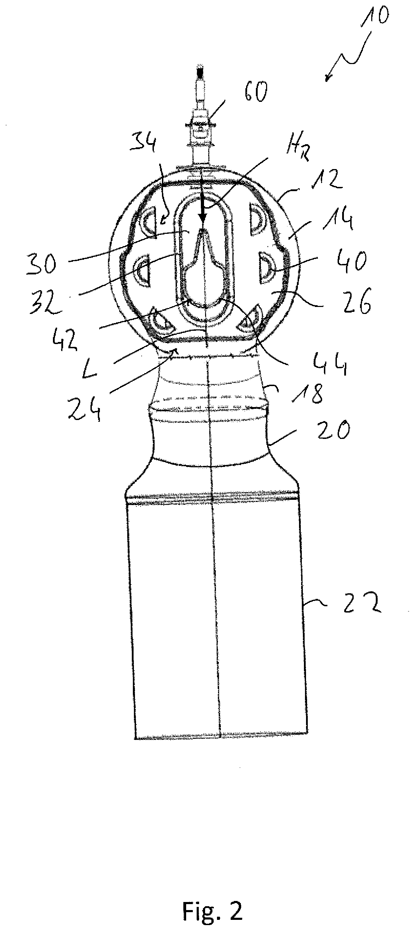

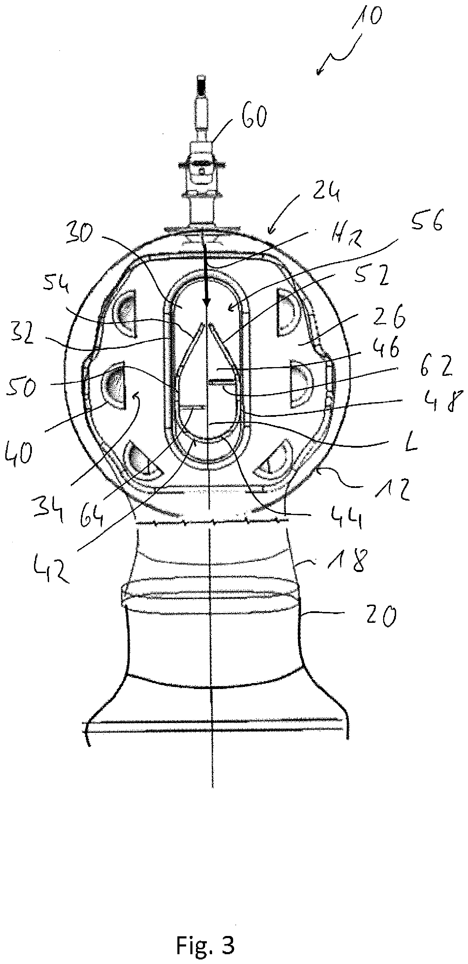

Es ist darauf hinzuweisen, dass von dem in den Figuren dargestellten Aufbau abweichende Realisierungen möglich sind. So können beispielsweise mehr oder weniger zweite Reaktionsmitteldurchtrittsöffnungen bzw. diese bereitstellende Ausformungen am Mischerkörper vorgesehen sein. Insbesondere könnte beidseits der in Richtung der Öffnungslängsachse langgestreckten ersten Abgasdurchströmöffnung beispielsweise jeweils eine entsprechend langgestreckte und im Bereich einer Ausformung bereitgestellte zweite Abgasdurchströmöffnung vorgesehen sein. Auch diese sind im Sinne der vorliegenden Erfindung die erste Abgasdurchströmöffnung umgebend, nämlich entlang des Außenumfangsbereich derselben sich erstreckend, angeordnet Auch kann, wie ein Vergleich der Figuren 2 und 3 dies deutlich zeigt, der Reaktionsmittelaufnahmekörper zum Bereitstellen des in Richtung auf die Reaktionsmittelabgabeanordnung sich zu verjüngenden Reaktionsmittelaufnahmebereichs mit verschiedenster Formgebung insbesondere im Übergang zwischen dem ringsegmentartigen Zentralbereich und den Aufnahmeplattenabschnitten ausgebildet sein. Um im Bereich der zweiten Abgasdurchströmöffnungen die vorangehend beschriebene Strömungsumlenkung in Richtung auf die erste Abgasdurchströmöffnung zu zu erreichen, könnten an dem plattenartigen Mischerkörper auch durch U-förmige Einschnitte in diesem bereitgestellte und nach dem Ausbiegen aus der Ebene des Mischerkörpers in Richtung zu der stromabwärtigen Seite desselben gebildete Umlenklaschen vorgesehen sein.

## Patentansprüche

1. Mischer für eine Abgasanlage einer Brennkraftmaschine, umfassend:
- einen plattenartigen Mischerkörper (26) mit einer bezüglich einer Abgasströmung (H_{A1}) in Richtung stromaufwärts orientiert anzuordnenden Anströmseite (36) und einer bezüglich der Abgasströmung (H_{A1}) in Richtung stromabwärts orientiert anzuordnenden Abströmseite (38),
- eine erste Abgasdurchströmöffnung (30) in dem Mischerkörper (26),
- einen an dem Mischerkörper (26) im Bereich der ersten Abgasdurchströmöffnung (30) getragenen Reaktionsmittelaufnahmekörper (42), wobei der Reaktionsmittelaufnahmekörper (42) einen von Abgas durchströmbaren Reaktionsmittelaufnahmekörper-Durchströmkanal (46) bereitstellt,
- eine Mehrzahl von zweiten Abgasdurchströmöffnungen (34) in dem Mischerkörper (26), wobei die zweiten Abgasdurchströmöffnungen (34) in dem Mischerkörper (26) die erste Abgasdurchströmöffnung (30) umgebend angeordnet sind,
**dadurch gekennzeichnet, dass** die erste Abgasdurchströmöffnung (30) in Richtung einer Öffnungslängsachse (L) langgestreckt ausgebildet ist, und dass der Reaktionsmittelaufnahmekörper (42) einen in Richtung der Öffnungslängsachse (L) sich V-förmig verjüngenden Reaktionsmittelaufnahmebereich (56) aufweist.

2. Mischer nach Anspruch 1, **dadurch gekennzeichnet, dass** an dem Mischerkörper (26) ein an der Abströmseite (38) hervorstehender, die erste Abgasdurchströmöffnung (30) vorzugsweise im Wesentlichen vollständig umgebender Öffnungsrand (32) vorgesehen ist.

3. Mischer nach Anspruch 2, **dadurch gekennzeichnet, dass** der Reaktionsmittelaufnahmekörper (42) an dem Öffnungsrand (32) getragen ist, oder/und dass der Reaktionsmittelaufnahmekörper (42) an der Abströmseite (38) des Mischerkörpers (26) über den Öffnungsrand (32) hervorstehend ausgebildet ist.

4. Mischer nach einem der vorangehenden Ansprüche, **dadurch gekennzeichnet, dass** in Zuordnung zu wenigstens einer, vorzugsweise jeder zweiten Abgasdurchströmöffnung (34) an dem Mischerkörper (26) eine an der Abströmseite (38) hervorstehende Ausformung (40) vorgesehen ist, wobei die Ausformung (40) an einer der ersten Abgasdurchströmöffnung (30) zugewandten Seite zum Bereitstellen einer der zweiten Abgasdurchströmöffnungen (34) offen ist.

5. Mischer nach Anspruch 4, **dadurch gekennzeichnet, dass** wenigstens eine, vorzugsweise jede der Ausformungen (40) im Wesentlichen die Form eines Kugelkalottensegments aufweist.

6. Mischer nach einem der vorangehenden Ansprüche, **dadurch gekennzeichnet, dass** der Reaktionsmittelaufnahmekörper (42) im Reaktionsmittelaufnahmebereich (56) zwei angewinkelt zueinander angeordnete Aufnahmeplattenabschnitte (52, 54) aufweist, wobei in wenigstens einem, vorzugsweise jedem der Aufnahmeplattenabschnitte (52, 54) wenigstens eine, vorzugsweise eine Mehrzahl von zu dem Reaktionsmittelaufnahmekörper-Durchströmkanal (46) offenen Reaktionsmitteldurchtrittsöffnungen (58) vorgesehen ist.

7. Mischer nach Anspruch 6, **dadurch gekennzeichnet, dass** der Reaktionsmittelaufnahmekörper (42) einen im Wesentlichen ringsegmentartig ausgebildeten, den Reaktionsmittelaufnahmekörper-Durchströmkanal (46) bereichsweise umgebenden Zentralbereich (44) und ausgehend von dem Zentralbereich die angewinkelt, vorzugsweise im Wesentlichen ungekrümmt aufeinander zu verlaufenden Aufnahmeplattenabschnitte (52, 54) aufweist.

8. Abgasanlage für eine Brennkraftmaschine, umfassend:
- ein Mischergehäuse (12),
- einen in einem stromaufwärtigen Endbereich (14) des Mischergehäuses (12) an dieses anschließenden ersten Abgasführungsbereich (16),
- einen in einem stromabwärtigen Endbereich (18) des Mischergehäuses (12) an dieses anschließenden zweiten Abgasführungsbereich (22),
- einen in einem Mischertragebereich (66) des Mischergehäuses (12) angeordneten Mischer (24) nach einem der vorangehenden Ansprüche, wobei der Mischer (24) mit seiner Anströmseite (36) dem ersten Abgasführungsbereich (16) zugewandt angeordnet ist,
- eine an dem Mischergehäuse (12) stromabwärts bezüglich des Mischerkörpers (26) angeordnete Reaktionsmittelabgabeanordnung (60) zur Abgabe von Reaktionsmittel mit einer auf den Reaktionsmittelaufnahmekörper (42) zu gerichteten Reaktionsmittel-Hauptabgaberichtung (H_{R}).

9. Abgasanlage nach Anspruch 8, **dadurch gekennzeichnet, dass** der Mischerkörper (26) mit seiner Anströmseite (36) im Wesentlichen orthogonal zu einer Abgas-Hauptströmungsrichtung (H_{A1}) im ersten Abgasführungsbereich (16) angeordnet ist, und dass die Reaktionsmittel-Hauptabgaberichtung (H_{R}) im Wesentlichen orthogonal zur Abgas-Hauptströmungsrichtung (H_{A1}) im ersten Abgasführungsbereich (16) steht.

10. Abgasanlage nach Anspruch 8 oder 9, **dadurch gekennzeichnet, dass** in dem Mischergehäuse (12) anschließend an den Mischertragebereich (66) ein Strömungsumlenkbereich (68) ausgebildet ist, wobei eine Abgas-Hauptströmungsrichtung (H_{A1}) in dem Mischergehäuse (12) stromaufwärts des Strömungsumlenkbereichs (68) und eine Abgas-Hauptströmungsrichtung (H_{A2}) in dem Mischergehäuse (12) stromabwärts des Strömungsumlenkbereichs (68) näherungsweise orthogonal zueinander stehen.

11. Abgasanlage nach einem der Ansprüche 8-10, **dadurch gekennzeichnet, dass** in dem ersten Abgasführungsbereich (16) wenigstens eine Abgasbehandlungseinheit, vorzugsweise Oxidationskatalysator oder/und Partikelfilter oder/und Stickoxid-Speicherkatalysator, angeordnet ist oder/und in dem zweiten Abgasführungsbereich wenigstens eine Abgasbehandlungseinheit, vorzugsweise SCR-Katalysator, angeordnet ist.

## Claims

1. Mixer for an exhaust system of an internal combustion engine, comprising:
- a plate-shaped mixer body (26) with an incoming flow side (36) to be arranged oriented in the upstream direction in relation to an exhaust gas flow (H_{A1}) and with an outflow side (38) to be arranged oriented in the downstream direction in relation to the exhaust gas flow (H_{A1}),
- a first exhaust gas flow-through opening (30) in the mixer body (26),
- a reactant-receiving body (42) carried on the mixer body (26) in the area of the first exhaust gas flow-through opening (30), wherein the reactant-receiving body (42) provides a reactant-receiving body flow-through duct (46) through which exhaust gases may flow,
- a plurality of second exhaust gas flow-through openings (34) in the mixer body (26), wherein the second exhaust gas flow-through openings (34) are arranged enclosing the first exhaust gas flow-through opening (30) in the mixer body (26), **characterized in that** the first exhaust gas flow-through opening (30) is configured as elongated in the direction of an opening longitudinal axis (L) and that the reactant-receiving body (42) has a reactant-receiving area (56) tapering in a V-shaped manner in the direction of the opening longitudinal axis (L).

2. Mixer in accordance with claim 1, **characterized in that** an opening edge (32), which protrudes on the outflow side (38) and preferably essentially fully encloses the first exhaust gas flow-through opening (30), is provided at the mixer body (26).

3. Mixer in accordance with claim 2, **characterized in that** the reactant-receiving body (42) is carried on the opening edge (32), or/and that the reactant-receiving body (42) is configured as protruding over the opening edge (32) on the outflow side (38) of the mixer body (26).

4. Mixer in accordance with one of the above claims, **characterized in that** a bulge (40) which protrudes on the outflow side (38), is provided at the mixer body (26) in association with at least one second exhaust gas flow-through opening (34) and preferably with each second exhaust gas flow-through opening (34), wherein the bulge (40) is open for the provision of one of the second exhaust gas flow-through openings (34) on a side facing the first exhaust gas flow-through opening (30).

5. Mixer in accordance with claim 4, **characterized in that** at least one bulge (40), preferably each of the bulges (40) has essentially the shape of a spherical cap segment.

6. Mixer in accordance with one of the above claims, **characterized in that** the reactant-receiving body (42) has two mounting plate sections (52, 54) that are arranged bent at an angle to one another in the reactant-receiving area (56), wherein at least one reactant passage opening (58), preferably a plurality of reactant passage openings (58), which are open toward the reactant-receiving body flow-through duct (46), are provided in at least one mounting plate section (52, 54), preferably in each of the mounting plate sections (52, 54).

7. Mixer in accordance with claim 6, **characterized in that** the reactant-receiving body (42) has a central area (44), which has an essentially ring segment-like configuration and encloses the reactant-receiving body flow-through duct (46) in some areas and the mounting plate sections (52, 54) which are bent at an angle and preferably extend toward one another in an essentially uncurved manner starting from the central area.

8. Exhaust system for an internal combustion engine, comprising:
- a mixer housing (12),
- a first exhaust gas-carrying area (16) adjoining the mixer housing (12) in an upstream end area (14) of this mixer housing (12),
- a second exhaust gas-carrying area (22) adjoining the mixer housing (12) in a downstream end area (18) of this mixer housing (12),
- a mixer (24) in accordance with one of the above claims, which is arranged in a mixer carrying area (66) of the mixer housing (12), wherein the mixer (24) is arranged with its incoming flow side (36) facing the first exhaust gas-carrying area (16), and
- a reactant release device (60), which is arranged downstream in relation to the mixer body (26) at the mixer housing (12), for the release of reactant with a reactant principal direction of release (H_{R}) directed toward the reactant-receiving body (42).

9. Exhaust system in accordance with claim 8, **characterized in that** the mixer body (26) is arranged with its incoming flow side (36) essentially at right angles to an exhaust gas principal direction of flow (H_{A1}) in the first exhaust gas-carrying area (16), and that the reactant principal direction of release (H_{R}) is essentially at right angles to the exhaust gas principal direction of flow (H_{A1}) in the first exhaust gas-carrying area (16).

10. Exhaust system in accordance with claim 8 or 9, **characterized in that** a flow deflection area (68) is formed in the mixer housing (12) adjoining the mixer carrying area (66), wherein an exhaust gas principal direction of flow (H_{A1}) in the mixer housing (12) upstream of the flow deflection area (68) and an exhaust gas principal direction of flow (H_{A2}) in the mixer housing (12) downstream of the flow deflection area (68) are approximately at right angles to one another.

11. Exhaust system in accordance with one of the claims 8-10, **characterized in that** at least one exhaust gas treatment unit, preferably oxidation catalytic converter or/and particle filter or/and NOx storage catalytic converter, is arranged in the first exhaust gas-carrying area (16), or/and at least one exhaust gas treatment unit, preferably SCR catalytic converter, is arranged in the second exhaust gas-carrying area.

## Revendications

1. Mélangeur pour un système d'échappement d'un moteur à combustion interne, comprenant :
- un corps de mélangeur en forme de plaque (26) avec un côté d'écoulement entrant (36) à disposer orienté dans la direction amont par rapport à un écoulement de gaz d'échappement (H_{A1}) et avec un côté d'écoulement sortant (38) à disposer orienté dans la direction aval par rapport à l'écoulement de gaz d'échappement (H_{A1}),
- une première ouverture de passage de gaz d'échappement (30) dans le corps de mélangeur (26),
- un corps de réception de réactif (42) porté sur le corps de mélangeur (26) dans la zone de la première ouverture de passage de gaz d'échappement (30), dans lequel le corps de réception de réactif (42) fournit un conduit de passage de corps de réception de réactif (46) à travers lequel les gaz d'échappement peuvent s'écouler,
- une pluralité de secondes ouvertures de passage de gaz d'échappement (34) dans le corps de mélangeur (26), dans lequel les secondes ouvertures de passage de gaz d'échappement (34) sont disposées en entourant la première ouverture de passage de gaz d'échappement (30) dans le corps de mélangeur (26),
**caractérisé en ce que** la première ouverture de passage de gaz d'échappement (30) est configurée comme étant allongée dans la direction d'un axe longitudinal d'ouverture (L) et **en ce que** le corps de réception de réactif (42) présente une zone de réception de réactif (56) se rétrécissant en forme de V dans la direction de l'axe longitudinal d'ouverture (L).

2. Mélangeur selon la revendication 1, **caractérisé en ce qu'**il est prévu sur le corps de mélangeur (26) un bord d'ouverture (32) faisant saillie sur le côté d'écoulement (38) et entourant de préférence sensiblement entièrement la première ouverture de passage de gaz d'échappement (30).

3. Mélangeur selon la revendication 2, **caractérisé en ce que** le corps de réception de réactif (42) est porté sur le bord d'ouverture (32), ou/et que le corps de réception de réactif (42) est configuré comme faisant saillie sur le bord d'ouverture (32) sur le côté d'écoulement (38) du corps de mélangeur (26).

4. Mélangeur selon l'une des revendications précédentes, **caractérisé en ce qu'**il est prévu sur le corps de mélangeur (26), en association avec au moins une seconde ouverture de passage de gaz d'échappement (34) et de préférence avec chaque seconde ouverture de passage de gaz d'échappement (34), un renflement (40) faisant saillie sur le côté d'écoulement (38), le renflement (40) étant ouvert pour la réalisation de l'une des secondes ouvertures de passage de gaz d'échappement (34) sur un côté tourné vers la première ouverture de passage de gaz d'échappement (30).

5. Mélangeur selon la revendication 4, **caractérisé en ce qu'**au moins un renflement (40), de préférence chacun des renflements (40) a essentiellement la forme d'un segment de calotte sphérique.

6. Mélangeur selon l'une des revendications précédentes, **caractérisé en ce que** le corps de réception de réactif (42) présente deux sections de plaque de montage (52, 54) qui sont disposées dans la zone de réception de réactif (56) en étant coudées l'une par rapport à l'autre, au moins une ouverture de passage de réactif (58), de préférence plusieurs ouvertures de passage de réactif (58), ouvertes vers le canal d'écoulement du corps de réception de réactif (46), étant prévues dans au moins une section de plaque de montage (52, 54), de préférence dans chacune des sections de plaque de montage (52, 54).

7. Mélangeur selon la revendication 6, **caractérisé en ce que** le corps de réception de réactif (42) présente une zone centrale (44), qui a une configuration essentiellement en forme de segment d'anneau et entoure le canal d'écoulement du corps de réception de réactif (46) dans certaines zones et les sections de plaque de montage (52, 54) qui sont pliées en angle et s'étendent de préférence l'une vers l'autre d'une manière essentiellement non incurvée à partir de la zone centrale.

8. Système d'échappement pour un moteur à combustion interne, comprenant :
- un boîtier de mélangeur (12),
- une première zone de transport de gaz d'échappement (16) adjacente au boîtier de mélangeur (12) dans une zone d'extrémité amont (14) de ce boîtier de mélangeur (12),
- une deuxième zone de transport de gaz d'échappement (22) adjacente au boîtier de mélangeur (12) dans une zone d'extrémité aval (18) de ce boîtier de mélangeur (12),
- un mélangeur (24) selon l'une des revendications précédentes, qui est disposé dans une zone de support de mélangeur (66) du boîtier de mélangeur (12), le mélangeur (24) étant disposé avec son côté d'écoulement entrant (36) tourné vers la première zone de guidage de gaz d'échappement (16), et
- un dispositif de libération de réactif (60), qui est disposé en aval par rapport au corps de mélangeur (26) au niveau du logement de mélangeur (12), pour la libération de réactif avec une direction principale de libération de réactif (H_{R}) dirigée vers le corps de réception de réactif (42).

9. Système d'échappement selon la revendication 8, **caractérisé en ce que** le corps de mélangeur (26) est disposé avec son côté d'écoulement entrant (36) essentiellement à angle droit par rapport à une direction d'écoulement principale de gaz d'échappement (H_{A1}) dans la première zone de transport de gaz d'échappement (16), et **en ce que** la direction principale de libération de réactif (H_{R}) est essentiellement à angle droit par rapport à la direction d'écoulement principale de gaz d'échappement (H_{A1}) dans la première zone de transport de gaz d'échappement (16).

10. Système d'échappement selon la revendication 8 ou 9, **caractérisé en ce qu'**une zone de déviation d'écoulement (68) est formée dans le logement de mélangeur (12) adjacent à la zone de transport de mélangeur (66), dans lequel une direction principale d'écoulement de gaz d'échappement (H_{A1}) dans le logement de mélangeur (12) en amont de la zone de déviation d'écoulement (68) et une direction principale d'écoulement de gaz d'échappement (H_{A2}) dans le logement de mélangeur (12) en aval de la zone de déviation d'écoulement (68) sont approximativement à angle droit l'une par rapport à l'autre.

11. Système d'échappement selon l'une des revendications 8 à 10, **caractérisé en ce qu'**au moins une unité de traitement des gaz d'échappement, de préférence un catalyseur d'oxydation ou/et un filtre à particules ou/et un catalyseur d'accumulation des NOx, est disposée dans la première zone de transport des gaz d'échappement (16), ou/et au moins une unité de traitement des gaz d'échappement, de préférence un catalyseur SCR, est disposée dans la deuxième zone de transport des gaz d'échappement.
